(19) Europäisches Patentamt
European Patent Office
Office européen des brevets

(11) **EP 2 021 116 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.02.2017 Patentblatt 2017/06**

(45) Hinweis auf die Patenterteilung:
**18.09.2013 Patentblatt 2013/38**

(21) Anmeldenummer: **07725377.1**

(22) Anmeldetag: **18.05.2007**

(51) Int Cl.:
*B01J 3/00* (2006.01)    *B01J 19/18* (2006.01)
*B29B 9/06* (2006.01)    *B29B 17/00* (2006.01)
*C08J 11/24* (2006.01)

(86) Internationale Anmeldenummer:
**PCT/EP2007/004469**

(87) Internationale Veröffentlichungsnummer:
**WO 2007/131803 (22.11.2007 Gazette 2007/47)**

(54) **VERFAHREN UND VORRICHTUNG ZUR WIEDERVERWERTUNG VON POLYESTERMATERIAL**

PROCESS AND DEVICE FOR THE RECYCLING OF POLYESTER MATERIALS

PROCÉDÉ ET DISPOSITIF DE RECYCLAGE DE MATÉRIAU POLYESTER

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.05.2006 DE 102006023354**

(43) Veröffentlichungstag der Anmeldung:
**11.02.2009 Patentblatt 2009/07**

(73) Patentinhaber: **Technip Zimmer GmbH**
**60439 Frankfurt am Main (DE)**

(72) Erfinder:
• **BACHMANN, Hoger**
**64331 Weiterstadt (DE)**
• **OTTO, Brigitta**
**14715 Milow (DE)**
• **DEISS, Stefan**
**55296 Harxheim (DE)**

• **HALLY, Nazim, S.**
**60388 Frankfurt (DE)**

(74) Vertreter: **Keil & Schaafhausen**
**Patent- und Rechtsanwälte PartGmbB**
**Friedrichstrasse 2-6**
**60323 Frankfurt am Main (DE)**

(56) Entgegenhaltungen:
EP-A2- 0 942 035         EP-B1- 1 084 171
WO-A-2004/106025      WO-A-2005/044901
DE-A1- 1 911 692         DE-A1- 10 349 016
DE-A1-102004 010 680   DE-A1-102004 015 515
US-A- 4 230 819

• **Kurt Hanimann, World PET Conference Zürich, 6-9 Dezember 2004 (Exzerpte)**

EP 2 021 116 B2

## Beschreibung

Die Erfindung betrifft ein Verfahren und eine Vorrichtung zur Wiederverwertung von Polyestermaterial, das vorzugsweise zum Herstellen von Polyesterformkörpern für Lebensmittelverpackungen verwendet wird.

## Stand der Technik

Die Wiederverwertung von Polyestermaterial, beispielsweise zerkleinerten gebrauchten Getränkeflaschen, ist bekannt.

So beschreibt die DE 195 03 055 das Aufschmelzen von zerkleinerten Polyesterabfällen unter Zusatz von wässrigen Lösungen oder Suspensionen von Phosphor-, Kobalt- und/oder manganhaltigen Polyester-Stabilisatoren, um eine Vergilbung bei der Herstellung neuer Flaschen zu verhindern. Dieses Verfahren erlaubt eine für die spätere Wiederverwendung zwingend erforderliche Beeinflussung des Polymerisationsgrades nur durch weitere, aufwendige Verfahrensschritte.

Die US 5,503,790 offenbart ein einfaches Verfahren, in dem Altpolyester-Schnitzel und Frischpolyester in einem Extruder gemeinsam aufgeschmolzen und zu Einweg-Artikeln geformt werden. Dieses Verfahren ist zur Herstellung hochwertiger Artikel wie beispielsweise Getränkeflaschen nicht geeignet, da Verunreinigungen nicht ausreichend entfernt werden und die Viskosität des Produktes zu niedrig ist.

Die DE 196 43 479 beschreibt die vollständige Spaltung von zerkleinerten Polyethylenterephthalat-Flaschen mittels Ethylenglykol, im Folgenden "Glykolyse" genannt, in Anwesenheit eines Katalysators. Das entstehende monomere BHET muß vor seiner weiteren Verwendung zur erneuten Polykondensation aufwendig durch Kristallisation gereinigt werden. Dieses Verfahren erfordert viele aufwendige Verfahrensschritte und Vorrichtungen zusätzlich zur üblichen Polyesteranlage.

Die US 4,138,374 beschreibt ein Verfahren zur Wiederverwertung von Altpolyester, der direkt bei der Produktion von Polyester-Formkörpern sortenrein anfällt. Dieser Altpolyester enthält daher nicht die für einen bereits gebrauchten Formkörper üblichen Verunreinigungen durch Lebensmittelreste, Etiketten, nicht bestimmungsgemäße Inhaltsstoffe wie Altöl, Farbreste und ähnliches. Gemäß dem Verfahren der US 4,138,374 kann daher der Altpolyester direkt in den letzten Abschnitt des letzten Polykondensationsreaktor ("Finisher") gegeben und dort mit dem Frischpolyester vermischt werden. In diesem Verfahren wird ausdrücklich auf eine Glykolyse des Altpolyesters verzichtet, um die Bildung von Etherverbindungen wie Diethylenglykol zu vermeiden. Auch andere Anpassungen an die Viskosität des Altpolyesters sind nicht notwendig, da die Produktionsabfälle üblicherweise stets gleich bleibende Qualität aufweisen. Für das Recycling von gebrauchten Getränkeflaschen und anderen Altpolyester-Sorten mit undefinierbaren Verunreinigungen eignet sich das Verfahren der US 4,138,374 daher nicht.

Zur Wiederverwertung von Polyester mit Nahrungsmittelqualität schlägt die EP 1084171 vor, zerkleinerten Altpolyester in einem Extruder aufzuschmelzen und entweder diese Schmelze mit Schmelze aus Frischpolyester zu mischen und diese Mischung zu granulieren oder beide Polyestersorten zunächst getrennt zu granulieren und anschließend die beiden Granulatsorten zu mischen. Das jeweils erhaltene Granulat soll dann in einem Festphasenpolykondensationsschritt ("Solid State Polykondensation", SSP) bis zum gewünschten höheren Polymerisationsgrad polykondensiert werden. Um ein Verkleben des Granulats in der SSP zu vermeiden, ist zwischen Granulator und SSP eine Kristallisationsstufe notwendig, die nach dem Stand der Technik üblicherweise eine Aufheizung des Granulates auf die Kristallisationstemperatur, gegebenenfalls eine anschließende Abkühlung sowie eine weitere Aufheizung auf die SSP-Temperatur erfordert.

Das in EP 1084171 beschriebene Verfahren erfordert zur Entfernung von Verunreinigungen aus dem zerkleinerten Altpolyester außerdem eine vorhergehende aufwendige Waschstufe.

Die Ausdrücke "Granulat" und "Chip" sollen im Folgenden die gleiche Bedeutung haben und werden daher synonym verwendet.

Auch die WO 2004/106025 beschreibt ein Verfahren zur Aufarbeitung von PET-Abfällen, insbesondere zerkleinerten PET-Flaschen. Diese werden sorgfältig gewaschen, in einem Extruder aufgeschmolzen und dabei durch Anlegen von Vakuum entgast, anschließend granuliert, mittels Heißluft innerhalb mehrerer Stunden kristallisiert und anschließend unter Vakuum in der festen Phase nachkondensiert. Die Verunreinigungen werden durch das mehrfache Anlegen von Vakuum entfernt. Optional kann die I.V. durch Zugabe von Ethylenglykol in den Entgasungsextruder beeinflusst werden, wobei die Ethylenglykolmenge aufgrund einer Viskositätsmessung am Ausgang des Extruders geregelt wird. Die WO 2004/106025 offenbart weiterhin die Möglichkeit, vor oder während des Extrusionsschrittes oder am Ende des Recyclingprozesses PET-Neumaterial zuzumischen. Das in WO 2004/106025 beschriebene Verfahren ist sowohl apparativ als auch energetisch sehr aufwendig, da Entgasungsextruder teuer und schwer zu beherrschen sind, die stundenlange Kristallisation mittels Heißluft große Apparate und viel Heizenergie benötigt und das mehrfache Anlegen von Vakuum (in Extruder und FestphasenNachkondensation) viel Energie bei der Vakuumerzeugung und lange Verweilzeiten zum Wegdiffundieren der Verunreinigungen erfordert.

Eine Festphasenpolykondensation (SSP) führt zu einer Erhöhung der I.V. im allgemeinen um 0.05 - 0,4 dl/g und zu einer Absenkung des Acetaldehydgehaltes von etwa 25 - 100 ppm auf Werte < 1 ppm im PET (Polyethylenterephthalat). Dabei wird die mittlere Viskosität so weit angehoben, dass die für das entsprechende Verwendungsgebiet notwendigen Festigkeiten erreicht werden, der Acetaldehydgehalt bei Lebensmittelverpackungen entsprechend den Anforderungen abgesenkt und der austretende Oligomerenanteil auf ein Mindestmaß reduziert wird. Dabei ist es wichtig, dass außerdem der als Vinylester gebundene Acetaldehyd, auch als Depot-Acetaldehyd bezeichnet, soweit abgebaut wird, dass bei der Verarbeitung des Polyestergranulats zu Verpackungen, insbesondere zu Polyesterflaschen nach dem Streckblas- und Spritzstreckblasverfahren, im Polyester nur eine minimale Acetaldehydmenge nachgebildet wird. Speziell für die Abfüllung von Mineralwasser in Polyesterflaschen sollten in der Flaschenwand aus Polyethylenterephthalat weniger als 2 ppm Acetaldehyd, bevorzugt sogar weniger als 1 ppm Acetaldehyd enthalten sein.

In der SSP wird eine Kettenvertängerung der Polyester in fester Phase, um die in einer Schmelze stärker auftretenden Nebenreaktionen möglichst gering zu halten, und eine Entfernung der schädlichen Nebenprodukte erreicht. Mit dieser Kettenverlängerung, die sich in einer Erhöhung der I.V. ausdrückt, können Produkte wie Flaschen oder Reifencord, die eine höhere Festigkeit und Formstabilität erfordern, hergestellt werden. Da Polyester jedoch teilkristalline Thermoplaste sind, weisen sie je nach Art einen mehr oder weniger großen amorphen Anteil auf. Diese Tatsache bereitet bei der Durchführung der SSP Schwierigkeiten, da die amorphen Anteile bei den für die SSP notwendigen Temperaturen zu Verklebungen führen, die bis zum Stillstand der Produktionsanlage führen können.

Daher ist es außerdem bekannt, als Vorstufe zur SSP eine Kristallisation der teilkristallinen Chips aus der Schmelzepolykondensation zur Vermeidung der Klebeneigung unter Stickstoff- oder Luftatmosphäre, bei Temperaturen zwischen 160-210 °C durchzuführen, wie in den US-Patenten 4,064,112, 4,161,578 und 4,370,302 beschrieben.

In der WO 94/17122 wird eine 2-stufige Kristallisation mit Vorheizung und Zwischenkühlung vor der SSP zur Vermeidung von Verklebungen offenbart. Die beschriebene SSP-Temperatur liegt bei Temperaturen zwischen 205 und 230 °C.

Zur Verbesserung der Qualität der Chips kann, wie in JP 09249744 oder US 5,663,290 beschrieben, mit feuchtem Inertgas vor oder während der SSP gearbeitet werden oder, wie in dem US-Patent 5,573,820 offenbart, können die Chips vorher mit heißem Wasser oder direkt mit Wasserdampf intensiv bei Temperaturen bis zu 200°C vor der Kristallisation behandelt werden. In diesem Fall ist aber bereits bei den üblichen Temperaturen von > 190 °C mit einem starken unerwünschten Abfall der I.V. durch Hydrolyse im PET zu rechnen.

Ein weiteres Verfahren ist die Behandlung der zu kristallisierenden Chips mit gereinigtem ungetrocknetem Stickstoff aus der SSP im Gegenstrom in einer 2. Kristallisationsstufe, wie in EP 222 714 dargelegt. Der dort beschriebene Effekt zur Reduzierung des Acetaldehydgehaltes wird eher als geringfügig bewertet.

Neben der SSP sind Verfahren zur Dealdehydisierung von Polyethylenterephthalat durch Behandlung mit Stickstoff oder mit trockener Luft, wie im US-Patent 4,230,819 beschrieben, bekannt. Um den geforderten niedrigen Acetaldehydgehalt im Material zu erhalten, werden Temperaturen bis etwa 230°C verwendet, während bei niedrigeren Temperaturen zwischen 170 und 200°C unbefriedigend hohe Acetaldehydgehalte im Granulat verbleiben. Bei Verwendung von Luft ist bei derart hohen Temperaturen mit einem starken thermooxidativen Abbau des Polyesters zu rechnen. Beim Einsatz von Stickstoff erhöhen sich die Kosten für das Gas und die aufwendige Reinigung.

Verarbeiter dieses Granulates sind vor allem Hersteller von Hohlkörpern. Häufig werden in nach dem Spritzgussverfahren arbeitenden Preformmaschinen Vorformlinge, so genannte Preforms, hergestellt, aus denen wiederum in einem weiteren Schritt Polyesterflaschen in einem Blasformverfahren produziert werden. Auch andere Formgebungen für Polyestergranulat, beispielsweise in Maschinen zur Film- und Folienherstellung sind möglich.

Inzwischen wurden auch Verfahren zur direkten Herstellung eines Formkörpers aus Polyesterschmelze mit der gewünschten hohen Viskosität unter Vermeidung einer SSP oder Dealdehydisierung entwickelt. So wird beispielsweise in der DE 195 03 053 ein Verfahren beschrieben, in dem die aus dem Polykondensationsreaktor austretende Schmelze in einer mit statischen Mischelementen versehenen Strecke mit einem Inertgas und einer AA-reduzierenden schwerflüchtigen Amidverbindung versetzt wird und unter Vakuumentgasung in kürzestmöglicher Zeit und unter geringstmöglicher Scherung der Schmelze einer Formgebungsvorrichtung zur Herstellung von Preforms zugeführt wird.

In der DE 195 05 680 wird der Polykondensationsschmelze mit einer IV = 0,5-0,75 dl/g ein Inertgas zugesetzt, die Schmelze in einem Nachkondensationsreaktor unter Vakuum bis zu einer Viskosität von 0,75-0,95 dl/g polykondensiert und die Schmelze danach sofort in ein Spritzgusswerkzeug geleitet.

Die EP 0 842 210 nennt eine andere Möglichkeit zur Vermeidung der SSP. Dort wird die Schmelzepolykondensation bis zu einer Viskosität von 0,65-0,85 dl/g durchgeführt, der Polyester gekühlt und granuliert, wieder aufgeschmolzen und danach unter Bildung einer großen Oberfläche in einer geeigneten Vorrichtung durch Spülen mit einem geeigneten Spülmittel von flüchtigen Substanzen wie AA befreit.

Wird die Polyesterschmelze nicht direkt von einer Formgebungseinheit abgenommen, so wird sie im Allgemeinen granuliert, um ein lager- und transportfähiges Zwischenprodukt zu erhalten.

Für die Granulierung von Kunststoffen ist unter anderem das Verfahren der Stranggranulation in den Markt eingeführt. Dieses Verfahren zeichnet sich dadurch aus, dass in kontinuierlicher Betriebsweise relativ lange Kunststoffstränge durch eine Lochplatte gepresst und anschließend frei hängend nach einer kurzen Transportstrecke durch Luft durch ein Wasserbad hindurchgeleitet werden. Wegen der geringen Oberfläche eines Kunststoffstranges im Vergleich zum Granulat kann hierbei eine Wasseraufnahme in engen Grenzen gehalten werden. Die abgekühlten Stränge werden getrocknet und einem Granulator zugeführt. Bei diesem Verfahren erfolgt die Granulierung im festen Zustand. Im Anschluss daran findet üblicherweise eine nochmalige Trocknung statt, beschrieben beispielsweise in DE 43 14 162 oder im Kunststoffhandbuch. Bei Nutzung dieses Granulierverfahrens ist die Möglichkeit einer starken punktuellen Temperaturerhöhung im Strang und somit erhöhter Abbauerscheinungen im Polymer und ungleichmäßigen Kristallisationsgrade von Chip zu Chip sehr groß. Bei dieser Technologie findet die Abkühlung im Chip von außen nach innen statt.

Eine weitere Möglichkeit der Granulierung von Polymerschmelze nach der Polykondensation ist heute vor allem die Unterwassergranulation, bei der die Schmelze direkt nach Austritt aus Düsen / Lochplatten des Granulators in einer anschließenden Wasserkammer mit Schneidmessern abgetrennt wird. Die abgetrennten Granulate sind noch plastisch und verformen sich durch die Oberflächenspannung beim Abschrecken im kalten Wasser, wobei die Abkühlung ebenfalls von außen nach innen stattfindet und nehmen eine annähernd runde bis linsenförmige Kontur an. Die abgekühlten Granulate werden mit dem Wasserstrom in einem Wasserabscheider von diesem getrennt und getrocknet und dann in Big Bags verpackt oder in Silos zur Weiterverarbeitung gefördert (DE 35 41 500, DE 199 14 116, EP 0 432 427, DE 37 02 841). Die auf diese Weise hergestellten Chips weisen einen gleichmäßigen Kristallisationsgrad unter 10 % auf.

In US 4,436,782 wird wiederum ein Verfahren zur Granulierung und Weiterbehandlung von PET zu Pellets beschrieben, in dem bei Temperaturen zwischen 260 °C und 280 °C ein Oligomerengemisch der Viskosität von 0,08 - 0,15 durch Düsen gepresst wird, so dass Tropfen entstehen, die durch einen Kühlbereich mit Inertgasatmosphäre in ein Wasserbad oder auf ein Transportband fallen und die Tropfen zu amorphen Pellets erstarren. Auch in diesem Verfahren entstehen Pellets mit einem hohen Anteil amorpher Strukturen.

Bei allen beschriebenen Verfahren werden Granulate mit niedrigem Kristallisationsgrad, üblicherweise unterhalb 12 %, erhalten. Um die Kristallinität der polymeren Granulate zum Beispiel als Vorstufe zur SSP zu erhöhen, sind bekanntermaßen kostenintensive Reaktionsstufen notwendig. Hohe Betriebskosten entstehen unter anderem dadurch, daß die mit Umgebungstemperatur ankommenden Granulate zuerst auf die Kristallisationstemperatur aufgeheizt werden müssen.

In WO 01/81450 werden ein Verfahren und eine Vorrichtung zur Vertropfung von Vorprodukten thermoplastischer Polyester und Copolyester beschrieben, die den Nachteil der oben beschriebenen Granulierverfahren die Kristallinität betreffend überwinden, eine Verfahrensverkürzung herkömmlicher Granulierverfahren beschreiben und auf bisher bekannten Verfahrensschritten und Vorrichtungen aufbauen, um oberflächenkristallisierte, vertropfte Vorprodukte in Form von Monomeren, Oligomeren, Monomer-Glykolgemischen oder von teilweise polykondensierten Materialien herzustellen. Dazu wird das Produkt in ein gasförmiges Medium eingebracht, wobei das gasförmige Medium nach dem Eintritt des vertropften Vorproduktes in das gasförmige Medium den Kristallisationsvorgang des Vorproduktes beschleunigt und den Kristallisationszustand beschleunigt herbeiführt, indem es das vertropfte Vorprodukt auf einer Temperatur > 100 °C und unter seinem Schmelzpunkt für einen begrenzten Zeitraum hält, bis eine ausreichende Kristallisation in der Oberfläche des Tropfens abgeschlossen ist. Auch hier liegt also eine stärker kristallisierte Außenschicht vor. Damit wird eine nicht klebende Oberfläche erhalten, die eine unmittelbare Weiterbehandlung zu hochpolymerem Polykondensat verspricht. Ein derart hergestelltes Material hält allerdings den notwendigen mechanischen Belastungen nur bedingt stand. Die Sprödigkeit gegenüber einem amorphen Chips nimmt zu. Ein weiterer Nachteil dieser Kristallinitätserzeugung im niedrigmolekularen Bereich ist ein nach der abgeschlossenen SSP vollkommen durchkristallisierter Chip mit starr ausgerichteten Kristallstrukturen, zu deren Zerstörung während des Aufschmelzvorganges bei der Herstellung beispielsweise von Preforms im Spritzgießverfahren ungleich höhere Energie aufgewendet werden muss. Durch die notwendige hohe Aufschmelztemperatur von mindestens etwa 300 °C steigt die Acetaldehydreformation in den Preforms stark an und die Qualität verschlechtert sich, vor allem auch durch verstärkte Abbaureaktionen. Außerdem besteht die Gefahr, dass der Ablauf der SSP durch die Unbeweglichkeit der Kettenenden beim Ansteigen der Viskosität behindert oder sogar gestoppt wird.

Ein weiteres Granulierverfahren zur Herstellung von kristallisierten Chips während des Granulationsprozesses wird in WO 01/05566 beschrieben. Schmelzeflüssige, aus Düsen austretende Kunststoffstränge werden unmittelbar in einem temperierten flüssigen Medium auf einer Kristallisationsstrecke teilkristallisiert, wobei in diesem flüssigen Medium Temperaturen über der Glasübergangstemperatur der Kunststoffstränge gehalten werden. Im Anschluss an die Kristallisationsstrecke folgt die Granuliervorrichtung. Durch die Kristallisation im Mantel des Kunststoffes ist eine ausreichende Festigkeit vorhanden, um anschließend nach kurzer Temperierungsstrecke in der Granulieranlage ohne vorherige Trocknung die Kunststoffstränge zu Pellets zu zerteilen. Auch hier liegt also eine stärker kristallisierte Außenschicht vor. Nachteilig ist, dass nach der Granulierung der Kunststoffe ein Gemisch aus Granulat und flüssigem Medium vorliegt, und somit eine Trocknung der Granulate mit bekannten Mitteln vorgenommen werden muss.

In der deutschen Patentanmeldung DE 103 49 016 A1 sowie in der WO 2005/044901 A1 wird beschrieben, dass direkt nach einer Unterwassergranulation die gerade hergestellten Pellets sehr schnell vom Wasser befreit werden und unter Nutzung der Eigenwärme trocknen und kristallisieren. Um ein Verkleben der Chips zu vermeiden, werden die Pellets unmittelbar nach dem Abschleudern des Wassers über einen Vibrations- oder Schwingförderer nach einer ausreichenden Verweildauer zu einer nachgeschalteten Abfüllanlage oder einer Weiterverarbeitungsanlage gefördert. Mit dieser Technologie erfolgt der Kristallisationsvorgang von innen nach außen im Pellet unter Ausnutzung der Eigenwärme, womit eine gleichmäßigere Kristallisation über den Durchmesser des Granulates erreicht wird.

Die mittels diesem Verfahren hergestellten Chips können beispielsweise gemäß der DE 102004015515 A1 in einer herkömmlichen Anlage zur Festphasendealdehydisierung weiterbehandelt werden, um den Acetaldehydgehalt auf einen gewünschten Wert zu verringern. Die nach der Kristallisation noch 140°C warmen Chips müssen dabei zur Festphasendealdehydisierung auf über 210°C aufgeheizt werden. Auf diese Weise lässt sich der Acetaldehydgehalt im Chip beispielsweise von 43 ppm auf 0,9 ppm verringern.

Die DE 19811280 beschreibt ein Rezyklierungsverfahren für aufgeschmolzene Polymerabfälle, bei dem Additive zum Einsatz kommen. Die DE 1911692 beschreibt ein Rezyklierungsverfahren von PET unter Einsatz eines Schneckenextruders sowie einer Depolymerisation, wobei die erhaltenen Spaltprodukte dann mit einem Prepolymer vermischt und kondensiert werden. Die US 4,230,819 beschreibt die Dealdehydisierung von Polymeren mit Hilfe von trockenem Inertgas. Die WO 04/106025 beschreibt ein Rezyklierungsverfahren für Polyester. Die WO 98/44029 beschreibt ein Verfahren zur Dekondimination von verunreinigten Polymeren bei mindestens 150 °C.

**Nachteil bekannter Verfahren**

Zusammenfassend bestehen die oben genannten Nachteile der bekannten Verfahren, die einen Anteil an Altpolyester einsetzen, darin, dass sie entweder einfach sind, aber die für Lebensmittelverpackungen geforderte Produktqualität nicht erreichen oder aufwendige Verfahrensschritte, insbesondere zur Erreichung der notwendigen I.V. und Entfernung von Verunreinigungen erfordern.

So sind für die bekannten Verfahren zur Festphasendealdehydisierung zum einen mehrere Behandlungsapparate erforderlich, nämlich mindestens ein Granulator, ein Kristallisator, der gegebenenfalls zweistufig ausgeführt sein kann, sowie ein Reaktor, in dem die Festphasendealdehydisierung ausgeführt wird. Zusätzlich werden Einrichtungen zum Weitertransport der Chips zwischen den einzelnen Stufen sowie Temperierungseinrichtungen zur Einstellung der für den jeweiligen Verfahrensschritt erforderlichen Temperaturen in den Chips benötigt. Das mehrfache Abkühlen und Aufheizen bedingt außerdem einen hohen Energieverbrauch der Anlage.

Ein weiterer, erheblicher Nachteil der herkömmlichen Verfahren besteht darin, dass als Behandlungsgas teurer, gegebenenfalls gereinigter, Stickstoff erforderlich ist. Dies ist erforderlich, weil zum Aufheizen der Chips das Behandlungsgas mit einer Temperatur, die höher als die eigentlich notwendige Granulat-Temperatur bei der Dealdehydisierung ist, zugeführt wird, um einen Wärmeübergang vom Gas auf die Chips zu erreichen. Würde in diesem Fall Luft als Behandlungsgas eingesetzt, würden durch die hohen Temperaturen oxidative Schädigungen auftreten und ein zu hoher Acetaldehydgehalt oder eine zu hohe Acetaldehydreformation (d. h. Nachbildung von Acetaldehyd) wären die Folge.

**Zu lösende Aufgabe:**

Der vorliegenden Erfindung liegt daher die Aufgabe zugrunde, ein Verfahren zur Herstellung eines Formkörpers aus einer Mischung von Altpolyester und Frischpolyester zur Verfügung zu stellen, das apparativ vereinfacht sowie mit geringen Betriebskosten zu betreiben ist und mit dem gleichzeitig die besonders hohen Qualitätsansprüche an den Polyester für Verpackungen bezüglich Viskosität, Farbe, Acetaldehydgehalt , Acetaldehydreformation, Aufschmelzverhalten sowie spezieller Anforderungen an Lebensmittelverpackungen, beibehalten oder sogar verbessert werden. Die genannten Nachteile des Standes der Technik sollen damit vermieden werden.

Diese Aufgabe wird durch die Ansprüche 1 bis 14 gelöst.

Die Lösung der Aufgabe ist ein Verfahren zur Herstellung eines Formkörpers aus einer Mischung von Altpolyester und Frischpolyester, mit folgenden Schritten:

a) Aufschmelzen des gewaschenen Altpolyesters in einer Aufschmelzvorrichtung,
b) Zugabe von Diol zur Schmelze des Altpolyesters in oder nach der Aufschmelzvorrichtung,
c) Vermischen der Schmelze des Altpolyesters mit einer Schmelze von Frischpolyester aus einem Schmelzereaktor,
d) Polykondensation der Schmelzemischung in einem Hochviskos-Schmelzereaktor unter reduziertem Druck,
e) Granulierung der Polyesterschmelze in einem Unterwassergranulator bei einer Wassertemperatur zwischen 90 und 99°C,
f) Abtrennen des Wassers vom Granulat unter möglichst geringer Abkühlung des Granulates,
g) Überführen des so erhaltenen wasserarmen Granulates nach der Wasserabtrennung direkt oder mittels eines Dosierorgans, besonders bevorzugt mittels einer Zellenradschleuse, in einen Dealdehydisierungsbehälter,

h) Behandeln des Granulates im Dealdehydisierungsbehälter mittels eines Spülluftstroms, wobei die Eintrittstemperatur des Spülluftstroms zwischen 180°C und 200°C liegt und die Verweilzeit 3 bis 20 Stunden beträgt.

Ein Altpolyestermaterial, beispielsweise aus gebrauchten Getränkeflaschen, mit einer IV von 0,5 bis 0,9 dl/g wird auf bekannte Weise zerkleinert und gewaschen. Dieser ungetrocknete oder auch auf bekannte Weise getrocknete Altpolyester wird mit einer gravimetrischen oder volumetrischen Dosierung einer Aufschmelzeinheit, z.B. einem Doppelschneckenextruder zudosiert. Der Doppelschneckenextruder enthält eine oder mehrere Vakuumzonen zur Entgasung. Das Vakuum wird mit Vakuumpumpen erzeugt und mit Hilfe der Ansteuerung des Motors bzw. mit Hilfe von Regelventilen geregelt. Vor den Vakuumpumpen befindet sich ein Kondensator/Abscheider zum Kondensieren niedermolekularer Bestandteile wie z.B. Abbauprodukte von PET und Wasser.

Der Doppelschneckenextruder kann auch ohne Vakuumzonen eingesetzt werden. Statt einer Doppelschnecke kann auch ein Compounder, ein Planetenwalzenextruder oder ein Einschneckenextruder mit oder ohne nachgeschaltete Zahnradpumpe mit oder ohne entsprechende Zonen zur Vakuumentgasung verwendet werden.

Hinter der Entgasungszone ist in der Aufschmelzeinheit eine Dosierstelle zum Einspeisen von Diol, beispielsweise Ethylenglykol angeordnet. Das Diol wird mit Hilfe einer Pumpe zudosiert. Diese Pumpe kann beispielsweise eine Zahnradpumpe, Kolbenpumpe, Kolbenmembranpumpe, Kreiselpumpe mit Regelventil oder eine Doppelzahnradpumpe sein. Alternativ ist auch der Einsatz von Wasser möglich, so dass der Altpolyester einer Hydrolyse unterworfen wird. Besonders bevorzugt ist der Einsatz eines Gemisches aus Diol, bevorzugt Ethylenglyzol und Wasser (10 : 90 bis 90 : 10), so dass der Altpolyester einer Glykolyse/ Hydrolyse unterworfen wird. Dies erfordert ggf. eine Vortrocknung des Altpolyesters auf Feuchtewerte von 2.000 ppm Wasser oder weniger. Der Vorteil des Einsatzes einer Diol/ Wasser-Mischung ist eine stärker mögliche Kontrolle/ Steuerung der Depolymerisierung (Glykolyse/ Hydrolyse), so dass mehr störende Stoffe entfernt werden können.

Mit Hilfe des Diols wird der Altpolyester einer partiellen Glykolyse unterzogen, die die Viskosität des Produkts auf den gewünschten I.V.-Wert verringert. Mittels der partiellen Glykolyse werden die hochmolekularen Polyesterketten gespalten und gleichzeitig der Altpolyester einem Reinigungsprozess unterzogen. Unerwünschte Abbauprodukte und aus dem Altpolyester stammende Verunreinigungen können auf diese Weise den Prozess schnell verlassen und somit die Qualität des Polyesters mit Altpolyesterzusatz erheblich verbessern. Diese Verbesserung ist vor allem am Farbwert b erkennbar.

Optional könnte auch ohne Zuführung von Ethylenglykol gearbeitet werden, falls der Altpolyester bereits geeignete Eigenschaften aufweist.

Hinter dem Doppelschneckenextruder sind bevorzugt Filter angeordnet. Die Filter können sich zusammensetzen aus einem feinmaschigem Schmelzefilter oder einer Kombination aus einem grobmaschigem Schmelzevorfilter und einem sich anschließenden feinmaschigem Schmelzefilter. Vor den Schmelzefiltern oder vor dem zweiten Schmelzefilter oder vor dem ersten Schmelzefilter befindet sich eine Zahnradpumpe zum Fördern der Schmelze durch die Filtrationseinrichtung und zum Einspeisen in den PET-Schmelzestrom. Als Schmelzefilter können sämtliche am Markt verfügbaren Filter für heiße Schmelze verwendet werden, die für die entsprechenden Temperatur- und Druckbereiche und Feinheiten üblich sind.

Eine Frischpolyesterschmelze wird auf herkömmliche Weise in einer mehrstufigen Polykondensationsanlage mit einer I.V. von 0,2-0,85 dl/g hergestellt. Der aus dem letzten Frischpolyester-Reaktor austretenden Schmelze wird die Altpolyesterschmelze nun in einer an sich bekannten Mischvorrichtung in Konzentrationen von bis zu 50% (max. 100%) bezogen auf den gesamten Schmelzestrom zugespeist. Die zusammengeführten Schmelzeströme werden gut durchmischt, in einen an sich bekannten Hochviskos-Schmelzereaktor, der im Folgenden auch als Endreaktor bezeichnet werden soll, eingespeist und dort die I.V. auf die gewünschte Ziel-IV von 0,6 -1,1 dl/g angehoben. Dabei werden gleichzeitig unerwünschte Nebenprodukte wie z.B. Acetaldehyd unter Vakuum der Schmelze entzogen.

Im Anschluss an den Endreaktor wird das Produkt über möglichst kurze Produktleitungen in die entsprechenden Anlagenteile verteilt und zu Granulat verarbeitet. Ein Teil der so erzeugten Polyesterschmelze kann auch ohne zwischenzeitliche Verfestigung direkt zu Formgebungseinheiten weitergeleitet werden.

Als Endreaktor wird ein Polykondensationsreaktor für die Herstellung von hohen Intrinsischen Viskositäten in der Schmelze ("HVSR") eingesetzt, wie er beispielsweise in EP 0320586 beschrieben ist. Dieser enthält Abstreifelemente zur ständigen Abreinigung von Schmelze, die an den Rührelementen haftet. Ebenso ist auch ein sogenannter "Double-Drive"-Reaktor (Hersteller: Zimmer AG), der beispielsweise in US 3,617,225 beschrieben ist, als Endreaktor geeignet. Dieser enthält statt einer durchgehenden Welle eine geteilte Welle, auf der die Rührelemente sitzen. Die beiden Halbwellen werden jeweils durch eigene Antriebe bewegt. Dadurch ist eine Anpassung der Drehzahl an die Reaktionsbedingungen, insbesondere an die Viskosität der Polymerschmelze, uneingeschränkt möglich.

Die Polyesterschmelze mit der gewünschten I.V. wird aus dem Endreaktor über entsprechende Schmelzeleitungen direkt einer Unterwasser-Granuliereinrichtung zugeführt, in der der Schmelzestrang unter möglichst geringer Abkühlung geschnitten wird. Die Temperatur des Schmelzestrangs beim Eintritt in den Granulator sollte bei PET zwischen 270 und 290°C, bevorzugt 280 - 285°C, betragen. Durch die Unterwasser-Granulierung entsteht hierbei ein kugelförmiges Granulat. Hierfür geeignete Granulatoren sind beispielsweise von den Herstellern BKG, Gala Industries und Rieter erhältlich.

Das Granulat wird durch den Wasserstrom zu einer Vorrichtung geführt, in der Wasser und Granulat möglichst weitgehend voneinander getrennt werden. Besonders gut ist hierfür eine Zentrifuge geeignet. Die Auswahl geeigneter Zentrifugen ist dem Fachmann bei Kenntnis der vorliegenden Erfindung ohne weiteres möglich.

Um, wie nachfolgend beschrieben, eine übermäßige Abkühlung des Polyestermaterials in diesem Verfahrensschritt zu vermeiden, ist die Verweilzeit des Polyestermaterials in der Unterwassergranulierung bevorzugt so kurz wie möglich, beispielsweise 30 Sekunden oder weniger, stärker bevorzugt 15 Sekunden oder weniger, weiter bevorzugt 5 Sekunden oder weniger, und insbesondere von 1 bis 0, 1 Sekunden.

Das Granulat wird durch den Wasserstrom zu einer Vorrichtung geführt, in der Wasser und Granulat möglichst weitgehend voneinander getrennt werden, wobei die Kontaktzeit zwischen Wasser und Granulat minimiert werden muss. Besonders gut ist hierfür eine Zentrifuge geeignet. Die Auswahl geeigneter Zentrifugen ist dem Fachmann bei Kenntnis der vorliegenden Erfindung ohne weiteres möglich.

Wesentlich für die Durchführbarkeit der vorliegenden Erfindung ist, dass die bis hierhin beschriebenen Vorrichtungen und Verfahrensschritte so ausgeführt werden, dass das aus der Zentrifuge austretende Granulat eine Temperatur von mindestens 130°C, bevorzugt mehr als 140°C und besonders bevorzugt mindestens 170°C aufweist. Die Abkühlung ist daher möglichst gering zu halten. Dies wird vor allem durch Verwendung von heißem Wasser im Unterwassergranulator erreicht. Um den Polyester nicht zu sehr abzukühlen, sollte die Wassertemperatur mindestens 90°C betragen. Um Verdunstungsverluste zu begrenzen, sollte eine Wassertemperatur von 98°C nicht überschritten werden.

Das vom Wasser im Wesentlichen befreite Granulat wird anschließend direkt in einen Reaktionsbehälter gegeben. Im günstigsten Fall fällt das Granulat aus der Zentrifuge nur aufgrund der Schwerkraft direkt in den Reaktionsbehälter. Abhängig von seiner Temperatur weist das Granulat nach der Zentrifuge noch einen Wassergehalt von 200 bis 2000 ppm auf.

Um eine kontrollierte kontinuierliche Zuführung zu erreichen, kann ein Dosierorgan dazwischengeschaltet sein. In jedem Fall muß das Dosierorgan so gestaltet sein, dass das Granulat nicht wesentlich abgekühlt wird. Es kann beispielsweise thermisch gegenüber der Umgebung isoliert und/oder beheizt sein. Dieses Dosierorgan ist bevorzugt eine Zellenradschleuse. Alternativ kann ein Schieber verwendet werden, der das Granulat im Austrag des Granulators kurz anstaut und in regelmäßigen Zeitintervallen öffnet, um das Granulat in den Reaktionsbehälter fallen zu lassen.

Der Reaktionsbehälter ist bevorzugt ein stehender zylindrischer Behälter mit einem Einlaß für das Granulat an der Oberseite und einem Auslaß für das dealdehydisierte Granulat an der Unterseite. Die Unterseite ist bevorzugt als konischer Boden ausgeführt, um eine gleichmäßige Entleerung zu ermöglichen. Der Reaktionsbehälter kann statische Einbauten zur Erhöhung seiner mechanischen Stabilität und/oder zum Abstützen des statischen Drucks der Granulatsäule aufweisen. Weiterhin kann er Rührorgane zum Bewegen des Granulates enthalten.

Weiterhin enthält der Reaktionsbehälter auf der Auslassseite mindestens einen Gaseinlaß, durch den das zur Dealdehydisierung erforderliche Spülgas zugeführt wird. Bevorzugt befindet sich dieser Gaseinlaß bereits im konischen Boden, um eine möglichst lange Kontaktzeit zwischen Granulat und Spülgas zu erreichen. Das Spülgas kann den Reaktionsbehälter an seiner Oberseite entweder durch den Granulateinlaß oder bevorzugt durch einen separaten Gasauslaß verlassen.

Der Reaktionsbehälter sollte so ausgelegt sein, dass die Verweilzeit des Granulates dort zwischen 3 und 20 Stunden, bevorzugt zwischen 10 und 14 Stunden beträgt.

Der Reaktionsbehälter kann eine Temperierungseinrichtung, beispielsweise einen Doppelmantel, aufweisen, mit der dem Reaktorinhalt Wärme zu- oder abgeführt werden kann.

Der Reaktionsbehälter besitzt weiterhin eine Füllstandsmessung (LC) und am Granulataustritt befindet sich eine Zellenradschleuse mit Antriebseinheit (M) zum Austragen des dealdehydisierten Granulates. Der Füllstand des Reaktionsbehälters wird mit Hilfe der Austragszellenradschleuse mit Antriebseinheit (M) geregelt.

Das Granulat fällt im Anschluß an die Austragszellenradschleuse in einen Granulatkühler und im Anschluß in ein Silo oder direkt in einen Sack oder Big Bag.

Als Spülgas kann jedes für diesen Zweck bekannte Inertgas, beispielsweise Stickstoff oder getrocknete Luft eingesetzt werden. Aus wirtschaftlichen Gründen wird jedoch bevorzugt Luft eingesetzt, die aus der Atmosphäre entnommen werden kann. Diese wird vor Eintritt in den Reaktionsbehälter soweit getrocknet, dass sie einen Taupunkt kleiner als 30°C, bevorzugt kleiner als -20°C und besonders bevorzugt kleiner als -50°C aufweist. Die Trocknung erfolgt bevorzugt nach allgemein bekannten Methoden mit Molekularsieb, beispielsweise Zeolith oder auch anderen geeigneten Absorbentien.

Über den in der Trocknung eingestellten Taupunkt, d. h. Wassergehalt des Spülgases kann der im erfindungsgemäßen Verfahren auftretende Anstieg oder Abfall der intrinsischen Viskosität beeinflusst werden. Einzelheiten hierzu sind in der DE 102004010680 A1 beschrieben.

Das Luft-Chip-Verhältnis beträgt bevorzugt 4:1 bis 0,4:1 (m:m); das bedeutet, dass in einer Zeiteinheit pro 1 kg Granulat, das in den Reaktor eintritt, zwischen 4 und 0,4 kg Luft zugeführt werden. Besonders bevorzugt ist der Bereich von 0,7:1 bis 0,4:1 (m:m). Größere Luftmengen erfordern unnötig große Gebläse, Rohre, Trocknungseinrichtungen und ähnliche Vorrichtungen sowie unnötig großen Energieeinsatz und sind daher nicht wirtschaftlich.

Die verwendete Luft kann teilweise oder vollständig im Kreislauf geführt werden. In diesem Fall muß die bereits gebrauchte Luft vor erneutem Eintritt in den Reaktor aufbereitet werden. Dabei werden Acetaldehyd und überschüssiges Wasser mittels Absorption an Molekularsieb oder ähnlichen, dem Fachmann bekannten Substanzen und Verfahren entfernt. Acetaldehyd zerfällt bei den erfindungsgemäß angewendeten Gastemperaturen in Wasser und Kohlendioxid.

Das Spülgas wird vor dem Eintritt in den Reaktionsbehälter auf eine definierte Temperatur, die zwischen 180 und 200°C liegt, erwärmt. Außerhalb dieses Temperaturbereichs ist eine wirtschaftlich vorteilhafte Durchführung des erfindungsgemäßen Verfahrens nicht mehr möglich.

Die Produkttemperatur des Granulates im Reaktionsbehälter soll zwischen 170 und 195°C liegen. Für eine wirtschaftlich zu betreibende Dealdehydisierung sollten die Eintrittstemperatur des Spülgases und die Produkttemperatur des Granulates eine möglichst geringe Differenz haben. Die maximale Temperaturdifferenz sollte hier 30 K, bevorzugt maximal 10 K betragen.

Dies ist möglich, da das Granulat bereits mit der beschriebenen hohen Temperatur aus der Zentrifuge in den Reaktionsbehälter eintritt. Im Reaktionsbehälter findet neben der Dealdehydisierung, für die Energie aufgewendet werden muß, auch die notwendige Kristallisation der Polyesterketten im Granulat statt, um Verklebungen vorzubeugen. Diese Kristallisation setzt Wärmeenergie frei wird. Überraschenderweise wurde festgestellt, dass diese Vorgänge sich bei den genannten Verfahrensbedingungen so überlagern, dass nur wenig zusätzliche Wärmeenergie über das Spülgas zugeführt werden muß.

Da das heiße Spülgas von unten nach oben durch die gesamte Granulatschüttung strömt, trocknet es zusätzlich das in der obersten Schicht im Reaktor befindliche Granulat, das nach dem Abzentrifugieren noch einen Wassergehalt von bis zu 2000 ppm aufweist. Während der Dealdehydisierung wird die Trocknung des Granulates bis auf Werte um 30 ppm Wassergehalt fortgesetzt.

Das mit dem erfindungsgemäßen Verfahren erzeugte Polyestergranulat weist für die weitere Verwendung sehr günstige Eigenschaften auf. Aufgrund der beschriebenen Verfahrensführung verändert sich die intrinsische Viskosität (I.V.) des Polyesters zwischen dem Eintritt in die Zerteilungseinrichtung in Schritt a. und dem Austritt aus dem Dealdehydisierungsbehälter in Schritt d. nur wenig, gesteuert in Abhängigkeit von der Produkttemperatur, der Verweilzeit, dem Taupunkt und der Temperatur des Spülgases sowie der Größe der Chips. Bei optimaler Einstellung wird im Reaktionsbehälter maximal eine I.V.-Erhöhung von 0,1 dl/g erreicht.

Ein besonderer Vorteil der vorliegenden Erfindung ist somit, dass auf übliche Kristallisationsstufen bei der Herstellung des Polyestergranulats verzichtet werden kann, wodurch sich die gesamte Verfahrenszeit deutlich verkürzt und der apparative Aufwand deutlich vereinfacht wird.

Ein Acetaldehydgehalt von < 1 ppm ist erreichbar, so dass das Granulat problemlos beispielsweise zur Herstellung von Lebensmittelverpackungen eingesetzt werden kann. Überraschenderweise kann das Granulat in den hierbei verwendeten Formgebungseinrichtungen, beispielsweise Spritzgießmaschinen zur Herstellung von Flaschenpreforms, bei vergleichsweise niedrigen Temperaturen von maximal 275°C, vorzugsweise sogar maximal 255°C verarbeitet werden. Diese niedrigen Temperaturen in Verbindung mit den schonenden Bedingungen des erfindungsgemäßen Verfahrens haben zur Folge, dass der Polyester im Verlauf der weiteren Verwendung nur maximal 0 bis 8 ppm Acetaldehyd-Reformation (neu gebildeter Acetaldehyd) aufweist. Es ist sogar möglich, mit erfindungsgemäß hergestelltem Granulat mit einem höheren AA-Gehalt, z. B. bis 3 ppm, in die Preformherstellung zu gehen und so ein Preform herzustellen, der nicht mehr als 3 ppm AA aufweist.

Die so hergestellten Granulate haben eine sehr einheitliche Kern- Mantel- Struktur. Die im Polarisationsmikroskop sichtbaren Spärolithe sind groß und durchgängig über den Querschnitt des Granulats verteilt. Es gibt keine wesentlichen I.V.- Unterschiede über den Querschnitt und keine feste Mantelstruktur im Vergleich zu Standard- SSP- Chips, die nach dem traditionellen Verfahren hergestellt wurden.

Der Kristallisationsgrad in den Chips untereinander ist sehr gleichmäßig und liegt beim Ausgang aus dem DAH-Reaktor unter 52%, die HOF (Heat of Fusion) als Maß für die zum Aufschmelzen der Chips notwendige aufzubringende Energie liegt unter 50 kJ/kg.

Es wurde überraschenderweise festgestellt, dass durch das erfindungsgemäße Verfahren alle Verunreinigungen aus dem Polyester so weitgehend entfernt werden konnten, dass das erhaltene Granulat die für Lebensmittelverpackungen erforderliche Qualität aufwies und beispielsweise den sogenannten "Challenge-Test" bestand.

Die wichtigsten Merkmale des nach dem erfindungsgemäßen Verfahren hergestellten Polyestergranulates lassen sich also folgendermaßen zusammenfassen:

- Das erfindungsgemäße Polyestergranulat mit einem Kristallisationsgrad < 52 %, bevorzugt < 48 % und einer Heat of Fusion (HOF) < 50 kJ/kg kann bei einer Barreltemperatur von maximal 275 °C, bevorzugt maximal 255 °C und minimal etwa 250 °C, zu Flaschenpreforms weiterverarbeitet werden.

- Das erfindungsgemäße Polyestergranulat mit einem Kristallisationsgrad < 52 %, bevorzugt < 48 % und einer Heat of Fusion (HOF) < 50 kJ/kg weist bei der Weiterverarbeitung zu Flaschenpreforms mit einer Barreltemperatur von maximal 275 °C und minimal etwa 250 °C eine Acetaldehydreformation von 0 bis 8 ppm, bevorzugt maximal 0 bis 2 ppm auf.

- Das erfindungsgemäße Polyestergranulat zeigt unabhängig vom Kristallisationsgrad keine Verklebung.

Bevorzugt bestehen sowohl der Altpolyester als auch der Frischpolyester zu mindestens 95 mol-% aus Ethylenterephthalat-Einheiten und das Diol ist Ethylenglykol.

Die Diol-Zugabemenge wird in einer bevorzugten Ausführungsform aufgrund der I.V. im Hauptstrom gesteuert. Dazu ist nach dem Schmelzefiltrationssystem ein Online-Viskosimeter zur Ermittlung der Schmelzeviskosität angeordnet. Abhängig von dieser Viskosität wird die Menge des zugespeisten Diols geregelt.

In einer alternativen Ausführungsform wird durch die so gemessene Viskosität anstelle der Diol-Zugabemenge das Vakuum des Extruders geregelt, wodurch ebenfalls die I.V. des Altpolyesters beeinflusst werden kann.

Bevorzugt wird als Aufschmelzeinrichtung ein Extruder eingesetzt.

Das Granulat wird im Dealdehydisierungsbehälter bei einer Granulattemperatur von 170 bis 195°C, über eine Verweilzeit von 3 bis 20 h mittels eines Spülluftstroms mit einer Eintrittstemperatur zwischen 180°C und 200 °C behandelt.

Die Spülluft weist bevorzugt einen Taupunkt Tp von kleiner als 30°C, bevorzugt kleiner als -20°C und besonders bevorzugt kleiner als -50°C auf.

Die Differenz zwischen Granulattemperatur und Eintrittstemperatur der Spülluft beträgt maximal ± 30 K, bevorzugt maximal ±10 K.

Die Differenz zwischen der intrinsischen Viskosität (I.V.) des Polyesters zwischen dem Eintritt in die Zerteilungseinrichtung in Schritt a. und dem Austritt aus dem Dealdehydisierungsbehälter in Schritt d. beträgt maximal ± 0,10 dl/g.

Die Luft wird vor der Einleitung in den Dealdehydisierungsbehälter bevorzugt mittels Molekularsieb oder anderer Absorbentien getrocknet.

Eine zusätzliche Aufgabe der Erfindung ist es, eine Vorrichtung zur Durchführung des erfindungsgemäßen Verfahrens zur Verfügung zu stellen.

Die erfindungsgemäße Vorrichtung zur Herstellung eines Formkörpers aus einer Mischung von Altpolyester und Frischpolyester besteht aus

a) Einem Extruder zum Aufschmelzen des Altpolyesters mit einer Diol-Dosiervorrichtung,
b) Einer Schmelzemischeinrichtung zum Mischen des Altpolyesters und Frischpolyesters,
c) Einem Hochviskos-Schmelzereaktor
d) Einem Unterwassergranulator,
e) Einer Zentrifuge und
f) Einem Dealdehydisierungsbehälter, der an der Oberseite mindestens eine Granulateinlassöffnung und an der Unterseite eine Granulatauslassöffnung sowie mindestens eine Spülgaseinlassöffnung und mindestens eine Spülgasauslassöffnung aufweist,

wobei der Granulatauslass der Zentrifuge mit dem Granulateinlass des Dealdehydisierungsbehälters nur durch eine passive Leitungseinrichtung und eine Dosiereinrichtung verbunden ist.

Näheres zur erfindungsgemäßen Vorrichtung ist bereits bei der Beschreibung des erfindungsgemäßen Verfahrens erläutert.

Die Dosiereinrichtung ist bevorzugt eine Zellenradschleuse.

Der Dealdehydisierungsbehälter enthält bevorzugt Einbauten.

Der Dealdehydisierungsbehälter enthält bevorzugt ein Rührorgan.

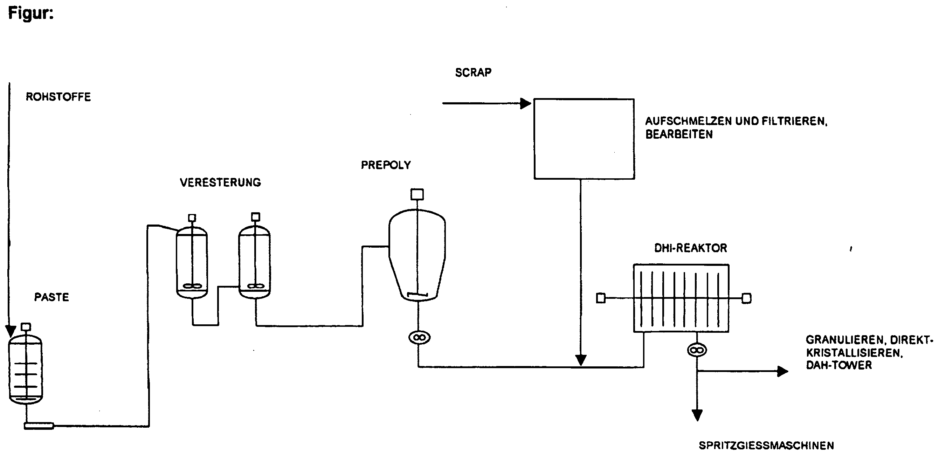

Die Figur zeigt schematisch eine Anlage zur Durchführung der vorliegenden Erfindung mit der mehrstufigen Frischpolyestersynthese (bestehend aus dem Pastenansatzbehälter, der Veresterung und der Prepolymerisation), der Aufschmelzeinheit für Flaschenschnitzel (Scrap) und dem Hochviskos- Schmelzereaktor. Die aus diesem letzten Reaktor austretende Polyesterschmelze kann entweder direkt einer Spritzgießmaschine zur Herstellung von Formkörpern, beispielsweise Flaschenvorformlingen ("Preforms"), Fasern oder Folien zugeführt werden oder zu einer Granuliereinrichtung geleitet werden. Das dort erzeugte Granulat wird erfindungsgemäß direkt anschließend mittels Latentwärme kristallisiert und dann dealdehydisiert.

Die vorliegende Erfindung ermöglicht es unter Einsatz von rezyklilerten Material sowie Verwendung einer Schmelze von Frischpolyester ein stabiles Verfahren für die Herstellung von Polyesterendprodukten zur Verfügung zu stellen, die die strengen Anforderungen auch für die Nahrungsmittelindustrie erfüllen, so dass die vorliegende Erfindung ein Mischpolyestermaterial zur Verfügung stellt, das in seinem Produkteigenschaften identisch mit vollständig frisch kondensiertem Polyestermaterial ist. Durch den Einsatz einer gewissen Menge an Altpolyester (Recyclingmaterial) ermöglicht die vorliegende Erfindung allerdings eine äußerst ökonomische und ökologische Verfahrensausgestaltung. Insbesondere kann das Verfahren der vorliegenden Erfindung auf den Zusatz von weiteren Additiven, wie er beispielsweise im Stand der Technik als notwendig erachtet wird, verzichten, was ebenfalls positiv im Hinblick auf die Frage der ökologischen als auch ökonomischen Verfahrensausgestaltungen ist.

**Beispiele**

Die Erfindung wird nunmehr anhand einiger, in keiner Weise die Erfindung beschränkender Ausführungsbeispiele näher beschrieben. Die angegebenen Eigenschaftswerte wurden hierbei wie folgt ermittelt:

Die Intrinsic-Viskosität (I.V.) wurde bei 25°C an einer Lösung von 500 mg Polyester in 100 ml eines Gemisches aus Phenol und 1 2-Dichlorbenzol (3:2 Gew.-Teile) gemessen.

Die Messung der Farbwerte L und b erfolgte nach HUNTER. Die Polyesterchips wurden zunächst im Trockenschrank bei 135 ± 5 °C während einer Stunde kristallisiert. Die Farbwerte wurden danach ermittelt, indem in einem Dreibereichfarbmeßgerät der Farbton der Polyesterprobe mit drei Fotozellen, denen je ein Rot-, Grün- und Blaufilter vorgeschaltet war, gemessen wurde (X-, Y- und Z-Werte): Die Auswertung erfolgte nach der Formel von HUNTER, wobei

$L = 10\sqrt{Y}$ und

$$b = \frac{7{,}0}{\sqrt{Y}\ (Y - 0{,}8467\ Z)}$$

ist.

Der Acetaldehydgehalt (AA) wurde bestimmt, indem der Acetaldehyd durch Erhitzen in einem geschlossenen Gefäß aus dem Polyester ausgetrieben wurde und der Acetaldehyd im Gasraum des Gefäßes gaschromatographisch mit dem Headspace-Injektionssystem H540 von Perkin Eimer (Trägergas: Stickstoff; Säule: 1,5 m Edelstahl; Füllung: Poropack Q, 80 - 100 mesh; Probemenge: 2g; Heiztemperatur: 150 °C. Heizdauer: 90 min) bestimmt wurde.

Das Produkt wurde eingewogen und von einer Anfangstemperatur um 35 °C mit einer Heizrate von 10 K / min auf 300°C erwärmt und anschließend der Schmelzpunkt und die für den Aufschmelzvorgang benötigte Schmelzenergie ermittelt (DSCO- entspricht der DSC (Differential Scanning Calorimetry)- Methode, jedoch ohne vorheriges Aufschmelzen der Probe).

Zur Bestimmung des Kristallisationsgrades $\alpha$ (= KTG) wurde dreimal die Dichte $\rho$ von 30 Chips in einem Dichtegradienten mit einem Tetrachlorethan/Heptan-Gemisch bei 23 °C ermittelt und daraus $\alpha$ berechnet nach

$$\alpha = \frac{\rho_c\ (\rho - \rho_a)}{\rho\ (\rho_c - \rho_a)}$$

wobei

die Dichte von 100 % kristallinem PET: $\rho c = 1{,}455$ und die Dichte von amorphem PET: $\rho a = 1{,}332$ ist.

Die Ermittlung der Schmelzenthalpie ("Heat of Fusion"; HOF) erfolgte in einem DSC-Gerät der Fa. Mettler entsprechend der ASTM E 793 der American Society for Testing of Materials mit einer Heizrate von 50 K / min von 100 auf 200 °C, 5 min Halten auf dieser Temperatur und anschließend mit einer Heizrate von 10 K / min bis auf 300 °C; die verbrauchte Energie wurde in kJ/kg bestimmt.

Beispiel 1:

Zur Herstellung von Granulat nach dem DHI-Verfahren wurden dem Prozess 50% ungetrocknete Flaschenschnitzel zugeführt. Im Beispiel betrug die Flaschenschnitzel -Menge 20 kg/h. Die Flaschenschnitzel wurden ungetrocknet eingesetzt und wiesen eine I.V. von 0,76 dl/g und einem Wasssergehalt von 1811 ppm auf. Diese Flaschenschnitzel wurden mittels einer gravimetrischen Dosierung von SCHENCK einem Doppelschneckenextruder von COPERION ZSK 26Mcc zugeführt. Das aufgeschmolzene Material wurde in der Vakuumzone des Doppelschneckenextruders bei einem Vakuum von 100 mbar entgast. Die verwendete Vakuumpumpe von BUSCH wurde mit Hilfe eines Inverters in Abhängigkeit des Vakuumsollwerts drehzahlgeregelt. Vor der Vakuumpumpe war ein Kühler zum Kondensieren von niedermolekularen Komponenten installiert. Es wurde kein Ethylenglykol zudosiert. Der Doppelschnekkenextruder wurde auf 260°C beheizt. Das aufgeschmolzene Produkt wurde anschließend mit Hilfe eines GNEUSS Schmelzefiltersystems filtriert.

Das Schmelzefiltersystem hatte folgenden Aufbau: Manueller Siebwechsler Typ HSS-Mprimus 45 mit Filter 315 $\mu$m, Schmelzepumpe Barmag GCB51 K-1-101Z (Möglichkeit der Druckdrehzahlreglung in Abhängigkeit des Vordrucks, in diesem Fall von Hand betrieben), vollautomatischer, druckkonstant arbeitender Schmelzefilter RSFgenius45 mit 30 $\mu$m Filterelementen. Das Schmelzefiltersystem wurde elektrisch beheizt.

Nach dem Schmelzefilter wurde mit einem Online-Viskosimeter Typ Feinprüf die Schmelzeviskosität gemessen. Die mittlere I.V., gemessen über die Lösungsviskosität, nach dem Schmelzefilter betrug 0,61 dl/g. Dieses Produkt wurde mit einer Produkttemperatur von 286°C dem auf bekannte Weise hergestellten Hauptschmelzestrom (Frischpolyester) aus dem Prepolymerisationsreaktor zugeführt, der eine mittlere I.V. von 0,72 dl/g hatte.

Die vereinigten Schmelzeströme wurden in einen DHI - Reaktor eingespeist und über eine Zeit von 33 min bei einem mittleren Vakuum von 2,0 mbar auf eine Viskosität auf 0,76 dl/g. polykondensiert.

Das Produkt wurde nach ca. 15 min Verweilzeit in der Förderleitung granuliert und mittels Latentwärme kristallisiert und in einem Dealdehydisierungsbehälter behandelt. Der eingesetzte Granulator war ein Unterwassergranulator Master 300 von der Fa. BKG. Das Endprodukt hatte eine IV von 0,81 dl/g und einen Acetaldehydgehalt von < 1 ppm.

Beispiel 2:

In diesem Beispiel wurde mit dem Aufbau/Ablauf wie unter Beispiel 1 gearbeitet mit dem Unterschied, daß in den Doppelschneckenextruder nach der Vakuumzone 42,9 ml/h Ethylenglykol (EG) zudosiert wurden. Die Viskosität nach der Schmelzefiltration lag bei 0,44 dl/g und die Produkttemperatur bei 285°C. Die Viskosität wurde mit Hilfe der zugegebenen EG-Menge geregelt: War die gemessene Viskosität des Online-Viskosimeters höher als der vorgegebene Sollwert, wurde die Zugabemenge EG erhöht und umgekehrt. Das EG wurde mit Hilfe einer Kolbenmembranpumpe dosiert, die am Austritt mit einem Durchflußmengenmesser ausgerüstet war. Die Regelung wurde zum einen so betrieben, dass das Viskosimeter direkt ein Stellsignal auf die Kolbenmembranpumpe gab, optional wurde dass Signal an den Sollwert des Durchflussmengenmessers geleitet, der entsprechend die Hubfrequenz und/oder die Hubweglänge der Pumpe steuerte. Der Hauptschmelzestrom (Frischpolyester) hatte eine Viskosität von 0,72 dl/g. Das Vakuum im DHI-Reaktor wurde auf 0,6 mbar geregelt.

Das Produkt nach dem DHI - Reaktor hatte eine I.V. von 0,69 dl/g.

Das Endprodukt hatte eine I.V. von 0,76 dl/g und einen Acetaldehydgehalt von < 1 ppm.

Der Farbwert b war in diesem Versuch deutlich besser als in Beispiel 1, so dass sich das nach Beispiel 2 erzeugte Material eindeutig besser für die Wiederverwendung als Lebensmittelverpackung eignete als das nach Beispiel 1 erzeugte Material.

Beispiel 3:

In diesem Beispiel wurde zur Herstellung von Preforms der Aufbau gemäß Beispiel 1 verwendet, ebenfalls ohne EG-Zugabe. Es wurden 10% Flaschenschnitzel, bezogen auf einen Hauptschmelzestrom von 20 kg/h in den Extruder eingespeist. Die Produkttemperatur nach dem Schmelzefiltersystem lag bei 287°C, die I.V. bei 0,57 dl/g. Der Hauptstrom hatte eine I.V. von 0,73 dl/g. Nach dem Reaktor hatte das Schmelzeprodukt eine IV von 0,87 dl/g. Das Vakuum im DHI-Reaktor wurde auf einen Sollwert von 0,8 mbar geregelt.

Das so erzeugte Schmelzeprodukt wurde zur Spritzgießmaschine geleitet. Vor der Spritzgießmaschine wurden 1000 ppm AA-Scavenger mit der Bezeichnung HAAA von der Fa. Coca Cola zudosiert.

Die hergestellten Preforms hatten eine I.V. von 0,78 dl/g und einen Acetaldehydgehalt von 5 ppm.

**Patentansprüche**

1. Verfahren zur Herstellung eines Formkörpers aus einer Mischung von Altpolyester und Frischpolyester, mit folgenden Schritten:

a) Aufschmelzen des gewaschenen Altpolyesters in einer Aufschmelzvorrichtung ,
b) Zugabe von Diol zur Schmelze des Altpolyesters in oder nach der Aufschmelzvorrichtung,
c) Vermischen der Schmelze des Altpolyesters mit einer Schmelze von Frischpolyester aus einem Schmelzereaktor,
d) Polykondensation der Schmelzemischung in einem Hochviskos-Schmelzereaktor unter reduziertem Druck,
e) Granulierung der Polyesterschmelze in einem Unterwassergranulator bei einer Wassertemperatur zwischen 90°C und 99°C,
f) Abtrennen des Wassers vom Granulat in einer Zentrifuge, wobei das aus der Zentrifuge austretende Granulat eine Temperatur von mindestens 130°C aufweist,
g) Überführen des so erhaltenen wasserarmen Granulates nach der Wasserabtrennung direkt oder mittels eines Dosierorgans, besonders bevorzugt mittels einer Zellenradschleuse, in einen Dealdehydisierungsbehälter,
h) Behandeln des Granulates im Dealdehydisierungsbehälter mittels eines Spülluftstroms, wobei die Eintrittstemperatur des Spülluftstroms zwischen 180°C und 200°C liegt und die Verweilzeit 3 bis 20 Stunden beträgt.

2. Verfahren gemäß Anspruch 1, wobei sowohl der Altpolyester als auch der Frischpolyester zu mindestens 95 mol-% aus Ethylenterephthalat-Einheiten besteht und das Diol Ethylenglykol ist.

3. Verfahren gemäß Anspruch 1, wobei die Diol-Zugabemenge aufgrund der I.V. im Hauptstrom gesteuert wird.

4. Verfahren gemäß Anspruch 1, wobei die Aufschmelzeinrichtung ein Extruder ist.

5. Verfahren gemäß Anspruch 1, wobei das Granulat im Dealdehydisierungsbehälter bei einer Granulattemperatur von 170 bis 195°C, über eine Verweilzeit von 3 bis 20 h mittels eines Spülluftstroms mit einer Eintrittstemperatur zwischen 180°C und 200°C behandelt wird.

6. Verfahren gemäß Anspruch 1, wobei die Spülluft einen Taupunkt Tp von kleiner als 30°C, bevorzugt kleiner als -20°C und besonders bevorzugt kleiner als -50°C aufweist.

7. Verfahren gemäß Anspruch 1, wobei die Differenz zwischen Granulattemperatur und Eintrittstemperatur der Spülluft maximal ± 30 K, bevorzugt maximal ± 10 K beträgt.

8. Verfahren gemäß Anspruch 1, wobei die Differenz zwischen der intrinsischen Viskosität (I.V.) des Polyesters zwischen dem Eintritt in die Zerteilungseinrichtung in Schritt e) und dem Austritt aus dem Dealdehydisierungsbehälter in Schritt h) maximal ± 0,10 dl/g beträgt.

9. Verfahren gemäß Anspruch 1, wobei die Luft vor der Einleitung in den Dealdehydisierungsbehälter mittels Molekularsieb oder anderer Absorbentien getrocknet wird.

10. Vorrichtung zur Herstellung eines Formkörpers aus einer Mischung von Altpolyester und Frischpolyester, bestehend aus:

a) einem Extruder zum Aufschmelzen des Altpolyesters mit einer Diol-Dosiervorrichtung,
b) einer Schmelzemischeinrichtung zum Mischen des Altpolyesters und Frischpolyesters,
c) einem Hochviskos-Schmelzereaktor,
d) einem Unterwassergranulator,
e) einer Zentrifuge und
f) einem Dealdehydisierungsbehälter, der an der Oberseite mindestens eine Granulateinlassöffnung und an der Unterseite eine Granulatauslassöffnung aufweist, sowie mindestens eine Spülgaseinlassöffnung und mindestens eine Spülgasauslassöffnung, wobei der Granulatauslass der Zentrifuge mit dem Granulateinlass des Dealdehydisierungsbehälters nur durch eine passive Leitungseinrichtung und eine Dosiereinrichtung verbunden ist.

11. Vorrichtung gemäß Anspruch 10, wobei die Dosiereinrichtung eine Zellenradschleuse ist.

12. Vorrichtung gemäß einem der Ansprüche 10 oder 11, wobei der Dealdehydisierungsbehälter Einbauten enthält.

13. Vorrichtung gemäß einem der Ansprüche 10 bis 12, wobei der Dealdehydisierungsbehälter ein Rührorgan enthält.

**Claims**

1. A process for the production of a shaped article from a blend of scrap polyester and virgin polyester, having the following steps:

a) melting the washed scrap polyester in a melting device;
b) adding diol to melt the scrap polyester in or downstream of the melting device;
c) blending the melt of scrap polyester with a melt of virgin polyester from a melt reactor;
d) polycondensing the melt blend in a high viscosity melt reactor under reduced pressure;
e) granulating the polyester melt in an underwater granulator at a water temperature in the range 90°C to 99°C;
f) separating the water from the granulate in a centrifuge, wherein the temperature of the granulate exiting the centrifuge is at least 130°C;
g) transferring the low water content granulate obtained following separation of the water directly or by means of a dosing means, particularly preferably by means of a rotary feeder, into a dealdehyding vessel;
h) treating the granulate in the dealdehyding vessel by means of a flushing air stream, wherein the inlet temperature of the flushing air stream is in the range 180°C to 200°C and the dwell time is 3 to 20 hours.

2. The process as claimed in claim 1, wherein at least 95 mole % of both the scrap polyester and the virgin polyester consists of ethylene terephthalate units and the diol is ethylene glycol.

3. The process as claimed in claim 1, wherein the quantity of added diol is controlled by the I.V. in the main stream.

4. The process as claimed in claim 1, wherein the melting device is an extruder.

5. The process as claimed in claim 1, wherein the granulate is treated in the dealdehyding vessel at a granulate temperature of 170°C to 195°C for a dwell time of 3 to 20 h by means of a flushing air stream with an inlet temperature in the range 180°C to 200°C.

6. The process as claimed in claim 1, wherein the flushing air has a dew point Dp of less than 30°C, preferably less than -20°C and particularly preferably less than -50°C.

7. The process as claimed in claim 1, wherein the difference between the granulate temperature and the inlet temperature of the flushing air is a maximum of ± 30 K, preferably a maximum of ± 10 K.

8. The process as claimed in claim 1, wherein the difference between the intrinsic viscosity (I.V.) of the polyester between the inlet into the fragmentation device in step e) and the outlet from the dealdehyding vessel in step h) is a maximum of ± 0.10 dl/g.

9. The process as claimed in claim 1, wherein the air is dried prior to being introduced into the dealdehyding vessel, by means of a molecular sieve or other adsorbents.

10. A device for producing a shaped article from a blend of scrap polyester and virgin polyester, consisting of:

a) an extruder for melting the scrap polyester, having a diol dosing device;
b) a melting device for blending the scrap polyester and virgin polyester;
c) a high viscosity melt reactor;
d) an underwater granulator;
e) a centrifuge; and
f) a dealdehyding vessel having at least one granulate inlet orifice at the top and a granulate outlet orifice at the bottom, as well as at least one flushing gas inlet orifice and at least one flushing gas outlet orifice, wherein the granulate outlet of the centrifuge is connected to the granulate inlet of the dealdehyding vessel solely by means of a passive guiding device and a dosing device.

11. The device as claimed in claim 10, wherein the dosing device is a rotary feeder.

12. The device as claimed in claim 10 or claim 11, wherein the dealdehyding vessel contains fittings.

13. The device as claimed in one of claims 10 to 12, wherein the dealdehyding vessel contains a stirring means.

## Revendications

1. Procédé destiné à la production d'un corps moulé à partir d'un mélange de vieux polyester et de polyester neuf, comprenant les étapes suivantes:

a) fusion du vieux polyester lavé dans un dispositif de fusion,
b) ajout de diol à la masse fondue de vieux polyester, à l'intérieur ou en aval du dispositif de fusion,
c) mélange de la masse fondue de vieux polyester avec une masse fondue de polyester neuf issue d'un réacteur de fusion,
d) polycondensation du mélange de masses fondues dans un réacteur de fusion à viscosité élevée, sous pression réduite,
e) granulation de la masse de polyester fondu dans un granulateur sous eau, à une température de l'eau comprise entre 90°C et 99°C,
f) séparation de l'eau et du granulat dans une centrifugeuse, et le granulat sortant de la centrifugeuse à une température d'au moins 130 °C,
g) transfert du granulat pauvre en eau ainsi obtenu après la séparation de l'eau, directement ou avec un organe de dosage, de manière particulièrement préférée au moyen d'une écluse à roue cellulaire, dans un contenant de désaldéhydisation,
h) traitement du granulat dans le contenant de désaldéhydisation au moyen d'un flux d'air de lavage, la température d'entrée du flux d'air de lavage étant comprise entre 180°C et 200°C et le temps de séjour étant de 3 à 20 heures.

2. Procédé selon la revendication 1, aussi bien le vieux polyester que le polyester neuf étant constitués d'au moins 95 % en moles d'unités de téréphtalate d'éthylène et le diol étant de l'éthylène glycol.

3. Procédé selon la revendication 1, la quantité de diol ajouté étant commandée sur la base de la viscosité intrinsèque (VI) dans le flux principal.

4. Procédé selon la revendication 1, le dispositif de fusion étant une extrudeuse.

5. Procédé selon la revendication 1, lors duquel on traite le granulat dans le contenant de désaldéhydisation à une température du granulat de 170 à 195°C, sur une durée de séjour de 3 à 20 h, au moyen d'un flux d'air de lavage, avec une température d'entrée comprise entre 180°C et 200°C.

6. Procédé selon la revendication 1, l'air de lavage présentant un point de rosée Tp inférieur à 30°C, de préférence inférieur à -20°C et de manière particulièrement préférée, inférieur à -50°C.

7. Procédé selon la revendication 1, la différence entre la température du granulat et la température d'entrée de l'air de lavage étant d'un maximum de ± 30 K, de préférence, d'un maximum de ± 1 0 K.

8. Procédé selon la revendication 1, la différence entre la viscosité intrinsèque (VI) du polyester entre l'entrée dans le dispositif de désolidarisation dans l'étape e) et la sortie du contenant de désaldéhydisation dans l'étape h) étant d'un maximum de ± 0,10 dl/g.

9. Procédé selon la revendication 1, lors duquel, avant l'introduction dans le contenant de désaldéhydisation, on fait sécher l'air au moyen d'un tamis moléculaire ou d'autres absorbants.

10. Dispositif destiné à la production d'un corps moulé à partir d'un mélange de vieux polyester et de polyester neuf constitué

a) d'une extrudeuse pour faire fondre le vieux polyester, avec un dispositif de dosage de diol,
b) d'un dispositif mélangeur de masses fondues pour mélanger le vieux polyester et le polyester neuf,
c) d'un réacteur de fusion à viscosité élevée,
d) d'un granulateur sous l'eau,

e) d'une centrifugeuse et

f) d'un contenant de désaldéhydisation qui sur la face supérieure comporte au moins un orifice d'entrée de granulat et sur la face inférieure un orifice de sortie de granulat, ainsi qu'au moins un orifice d'entrée de gaz de lavage et au moins un orifice de sortie de gaz de lavage, la sortie de granulat de la centrifugeuse étant reliée à l'entrée de granulat du contenant de désaldéhydisation uniquement par un dispositif de conduits passif et par un dispositif de dosage.

**11.** Dispositif selon la revendication 10, le dispositif de dosage étant une écluse à roue cellulaire.

**12.** Dispositif selon l'une quelconque des revendications 10 ou 11, le contenant de désaldéhydisation contenant des éléments encastrés.

**13.** Dispositif selon l'une quelconque des revendications 10 à 12, le contenant de désaldéhydisation comprenant un organe agitateur.

**Figur:**

EP 2 021 116 B2

ROHSTOFFE

VERESTERUNG

PREPOLY

SCRAP

AUFSCHMELZEN UND FILTRIEREN, BEARBEITEN

PASTE

DHI-REAKTOR

GRANULIEREN, DIREKT-KRISTALLISIEREN, DAH-TOWER

SPRITZGIESSMASCHINEN

**IN DER BESCHREIBUNG AUFGEFÜHRTE DOKUMENTE**

**In der Beschreibung aufgeführte Patentdokumente**

- DE 19503055
- US 5503790 A
- DE 19643479
- US 4138374 A
- EP 1084171 A
- WO 2004106025 A
- US 4064112 A
- US 4161578 A
- US 4370302 A
- WO 9417122 A
- JP 09249744 B
- US 5663290 A
- US 5573820 A
- EP 222714 A
- US 4230819 A
- DE 19503053
- DE 19505680
- EP 0842210 A

- DE 4314162
- DE 3541500
- DE 19914116
- EP 0432427 A
- DE 3702841
- US 4436782 A
- WO 0181450 A
- WO 0105566 A
- DE 10349016 A1
- WO 2005044901 A1
- DE 102004015515 A1
- DE 19811280
- DE 1911692
- WO 04106025 A
- WO 9844029 A
- EP 0320586 A
- US 3617225 A
- DE 102004010680 A1